# EUROPEAN PATENT APPLICATION

(11) **EP 4 727 029 A1**
(43) Date of publication of application: **15.04.2026**
(21) Application number: 25202266.0
(22) Date of filing: 15.09.2025
(51) Int. Cl.: H04B 7/0456, H04B 7/06

(54) **CONFIGURING BEAMFORMING IN AN INTEGRATED SENSING AND COMMUNICATIONS NETWORK**

(30) Priority: 10.10.2024 GB 202414926
(71) Applicant: Vodafone Group Services Limited, Newbury RG14 2FN (GB)
(72) Inventor: MARTINS, Diogo, London, W2 6BY (GB); BOUKLEY HASAN, Wael, London, W2 6BY (GB)
(74) Representative: Boult Wade Tennant LLP

(57) **Abstract**

The disclosure provides a method for configuring beamforming for an air interface of an integrated sensing and communications cellular network. The method comprises obtaining data indicative of the performance of the air interface, inputting the obtained data into a model comprising a machine learning model for determining precoding information, using the precoding information for configuring the beamforming of a beam comprising one or more main lobes and one or more side lobes, and selecting at least one of the main lobes for sensing and at least one of the side lobes for communication. The disclosure further provides a method for generating the model.

## Description

### Technical Field

The present disclosure relates to configuring beamforming for an air interface of an integrated sensing and communication cellular network and, in particular, for configuring the beamforming with the use of a machine learning model.

### Background

Beamforming in cellular networks is a signal processing technique by which radio signals are spatially directed towards a specific target. The target may be a User Equipment (UE) in the case of a downlink signal. The target may be a base station in the case of an uplink signal. The base station may be a gNodeB.

Beamforming involves using multiple antennas to each transmit the desired signal with varying phases and powers. The transmitted signals from each antenna then constructively and destructively interfere. The resulting beam may have a 'main lobe' directed towards the desired target. It may also have one or more 'side lobes' which may or may not be directed towards the desired target.

Through the use of beamforming, cellular networks may ensure that most of the energy used in transmission is contained in the main lobe. Thus, most of the energy is directed towards the desired target. However, there is still energy in the side lobes which may be considered to be wasted.

Furthermore, providers of cellular networks are limited in the frequency spectrum available to them. That is, cellular network providers are only permitted to make use of a certain band of frequencies. Thus, there is a need to make efficient use of limited frequency resources.

Current cellular networks are used for wireless communication services. Thus, beamforming is used to direct information transmission. However, future cellular networks will be integrated sensing and communication (ISAC) networks. That is, they will simultaneously provide wireless communication services as well as acting as a sensor node to serve use cases more typically seen in radars.

Thus, there is a desire to optimise beamforming in an integrated sensing and communication cellular network to improve energy efficiency and utilisation of the frequency spectrum.

### Summary

A first aspect of the present disclosure provides a method for configuring beamforming for an air interface of an integrated sensing and communication cellular network; the method comprising: obtaining data indicative of the performance of the air interface; inputting the obtained data into a model for determining precoding/decoding information, the model comprising a machine learning model; using the precoding information determined by the model for configuring the beamforming; wherein configuring the beamforming comprises: forming a beam comprising one or more main lobes and one or more side lobes; and selecting at least one of the main lobes for sensing and at least one of the side lobes for communication.

The data indicative of the performance of the air interface may be indicative of communication performance.

The data indicative of the performance of the air interface may be indicative of sensing performance.

The model may further be for determining decoding information. The method may comprise subsequent to the step of using the precoding information, a step of using the decoding information determined by the model for mitigation of interference.

The data indicative of the performance of the air interface may comprise data indicative of any, more than one or all of received signal power, signal quality, signal error, a location of a cell of the cellular network, or channel quality.

The data indicative of the performance of the air interface may comprise any, more than one or all of Reference Signal Received Power, Reference Signal Time difference, Line of Sight indicators, Non Line of Sight indicators, Signal to Noise ratio, Signal to Interference ratio, Signal to Interference plus Noise ratio, Block Error Rate, Error Vector Magnitude, Sounding Reference Signal, Channel Status Indicators, Channel State Indicator Reference Signal, Rank Indicators, or Channel Quality Indicators.

The data indicative of the performance of the air interface may comprise data related to sensing. For example, the data may comprise data relating to interference between a sensing lobe and a communications lobe of a beamformed beam. The data may comprise data relating to interference between one or more sensing sidelobes (that is, cross-link interference) of a beamformed beam.

Although in the present disclosure the model takes data indicative of the performance of the air interface as an input, it would be understood by the person skilled in the art that the inputs of the model are not limited to data indicative of the performance of the air interface. For example, the model may take additional data as an input. For example, the model may take timestamp information as an input.

The air interface may be an air interface between a user equipment and a base station of a cellular network.

The base station may be a gNodeB.

The cellular network may be any, more than one or all of a 5G cellular network, a 5G+ cellular network, a 5G-Advanced cellular network, or any other suitable cellular network.

The precoding information may be information that allows for the generation of a precoding matrix.

The method may comprise subsequent to the step of using the precoding information, and optionally the decoding information, a step of re-training the machine learning model, wherein re-training the machine learning model may comprise training an updated machine learning model based on the obtained data, and utilizing the updated machine learning model for determining future precoding information and optionally decoding information.

A second aspect of the disclosure provides a method for generating a machine learning model for use in the method for configuring beamforming. The method comprises transmitting at least two training beams over an air interface, obtaining training data from measurement of the at least two training beams indicative of the performance of the air interface, and training a machine learning model based on the obtained training data.

The training data indicative of the performance of the air interface may comprise data indicative of any, more than one or all of received signal power, signal quality, signal error, a location of a cell of the cellular network, or channel quality.

The training data indicative of the performance of the air interface may comprise any, more than one or all of Reference Signal Received Power, Reference Signal Time difference, Line of Sight indicators, Non Line of Sight indicators, Signal to Noise ratio, Signal to Interference ratio, Signal to Interference plus Noise ratio, Block Error Rate, Error Vector Magnitude, Sounding Reference Signal, Channel Status Indicators, Channel State Indicator Reference Signal, Rank Indicators, or Channel Quality Indicators.

The training data indicative of the performance of the air interface may comprise data related to sensing. For example, the training data may comprise data relating to interference between a sensing lobe and a communications lobe of a beamformed beam. The training data may comprise data relating to interference between one or more sensing sidelobes (that is, cross-link interference) of a beamformed beam.

Although in the present disclosure the model uses training data indicative of the performance of the air interface for training, it would be understood by the person skilled in the art that the training data of the model are not limited to data indicative of the performance of the air interface. For example, the method may use additional for training. For example, the method may use timestamp information for training.

The step of training an updated machine learning model in the method for configuring beamforming may be carried out based on the obtained data in combination with the obtained training data.

The training may comprise supervised learning. The training may comprise unsupervised learning.

The machine learning model may comprise any, more than one or all of deep learning, reinforced machine learning, unreinforced machine learning, neural networks, K-means clustering, regression analysis, or other suitable techniques, analyses, computations, or the like.

The step of using the precoding information may comprise transmitting the precoding information between a user equipment and a base station.

The step of using the precoding information may comprise determining a precoding matrix from the determined precoding information. Configuring the beamforming may comprise forming a beam using the determined precoding matrix.

The method may comprise a step of using the decoding information determined by the model for mitigation of interference.

The step of using the decoding information may be subsequent to the step of using the precoding information.

The step of using the decoding information may comprise transmitting the decoding information between a user equipment and a base station.

Transmitting precoding or decoding information between a user equipment and a base station may comprise transmitting precoding or decoding information from a user equipment to a base station.

Transmitting precoding or decoding information between a user equipment and a base station may comprise transmitting precoding or decoding information from a base station to a user equipment.

The method may comprise a step of re-training the machine learning model.

The step of re-training the machine learning model may comprise training an updated machine learning model.

Training an updated machine learning model may be carried out based on the obtained data indicative of the performance of the air interface.

The step of re-training the machine learning model may comprise utilizing the updated machine learning model for determining future precoding/decoding information.

The step of re-training the machine learning model may be subsequent to the step of using the precoding information.

The step of re-training the machine learning model may be subsequent to the step of using the decoding information.

The step of configuring the beamforming may comprise forming a beam using the determined precoding matrix.

A third aspect of the disclosure provides a computer program product comprising instructions which, when the program is executed by a computer, cause the computer to carry out any method disclosed herein.

A fourth aspect of the disclosure provides an entity of a cellular network for carrying out any method disclosed herein.

### Brief Description of the Drawings

The disclosure may be put into practice in a number of ways and preferred embodiments will now be described by way of example only and with reference to the accompanying drawings, in which:
Figure 1 shows an exemplary integrated sensing and communications network.
Figure 2 shows a beamformed beam in an exemplary integrated sensing and communications network.
Figure 3 shows a method for training a model for determining precoding and/or decoding information.
Figure 4 shows a method for configuring beamforming.

### Detailed Description

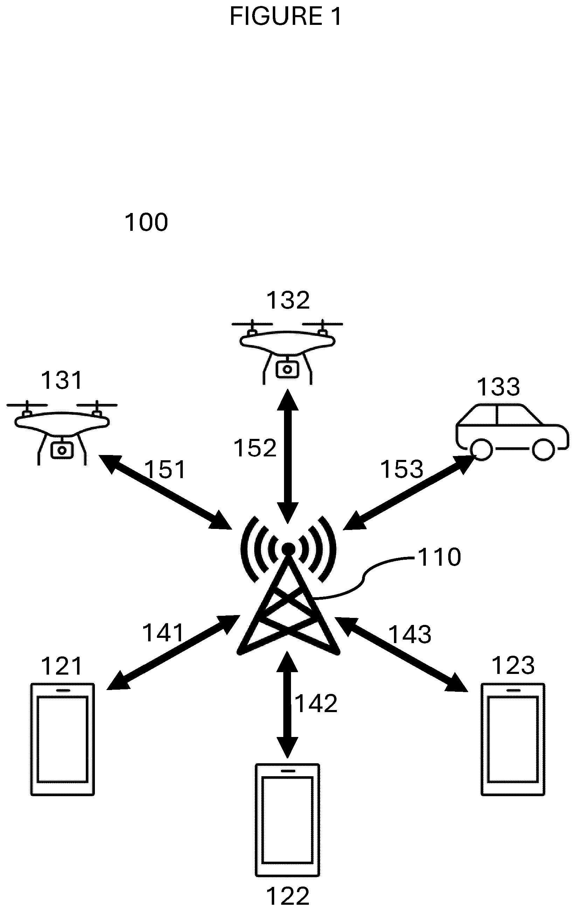

Figure 1 shows a schematic diagram of an exemplary ISAC cellular network 100. The network 100 comprises a base station 110, one or more UEs 121, 122, 123, and one or more sensing targets 131, 132, 133. The sensing targets may be either ground based or aerial or a combination. The network 100 comprises air interfaces 141, 142, 143 between the base station 110 and the UEs 121, 122, 123. Each air interface 141, 142, 143 comprises a downlink and an uplink. The network 100 comprises sensing channels 151, 152, 153 between the base station 110 and the sensing targets 131, 132, 133.

In typical operation as a communications network, there may be a communications signal to be transmitted from the base station 110 to a target UE, for example UE 121, over an air interface, for example air interface 141.

In typical operation as a sensing network, there may be a sensing signal to be transmitted from the base station 110 to a sensing target, for example sensing target 131, over a sensing channel, for example, sensing channel 151.

In typical operation as an ISAC cellular network, the network 100 may combine the operation of a communications network with that of a sensing network. That is, there may be a communications signal to be transmitted from the base station 110 to a target UE, for example UE 121, over an air interface, for example air interface 141 and a sensing signal to be transmitted from the base station 110 to a sensing target, for example sensing target 131, over a sensing channel, for example, sensing channel 151.

The base station 110 may comprise a plurality of antennas for transmission. The communications and/or sensing signals to be transmitted are transformed by a precoding matrix to provide a separate precoded signals to be transmitted for each antenna of the plurality of antennas. The separate precoded signals when transmitted from each antenna may interfere constructively and destructively to form a beamformed beam.

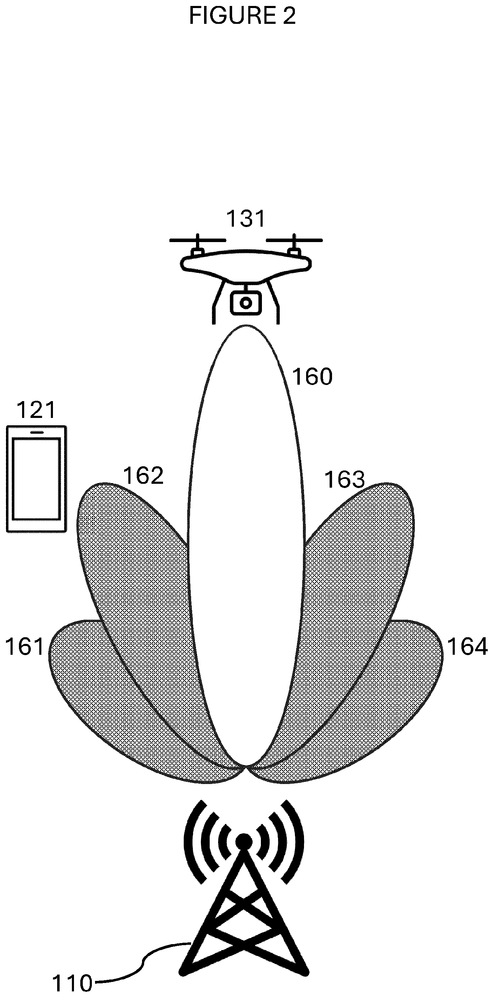

Figure 2 shows a schematic of a beamformed beam in an exemplary ISAC network according to the present disclosure. The beam comprises a main lobe 160 and a plurality of side lobes 161, 162, 163, 164. The main lobe carries more power than the side lobes. Although depicted with four side lobes, the disclosure is not limited to embodiments comprising four side lobes and it is contemplated herein that it may be implemented with two, three, four, five, six, or more side lobes.

The communications and/or sensing signal may be substantially transmitted in any of the main lobe 160 or one of the plurality of side lobes 161, 162, 163, 164.

It may not be possible or desirable to select the same lobe of the beamformed beam for carrying both the communications and sensing signal. Thus, it may be preferable to select the main lobe 160 for carrying either the sensing or the communications signal and select one or more of the side lobes 161, 162, 163, 164 for carrying the other of the sensing or the communications signal.

The selection of the main lobe 160 for carrying either the sensing or the communications signal and the selection of one or more of the side lobes 161, 162, 163, 164 for carrying the other of the sensing or the communications signal depends on the precoding matrix.

Selection of a lobe 160, 161, 162, 163, 164 for carrying a signal means ensuring that the signal is substantially transmitted in that lobe and directing the lobe towards the target of the signal. For example, if the signal is a communications signal between the base station 110 and a target UE, for example UE 121, the lobe 160, 161, 162, 163, 164 selected for carrying the communications signal may need to be directed towards the target UE. If the signal is a sensing signal between the base station 110 and a sensing target, for example, sensing target 131, the lobe 160, 161, 162, 163, 164 selected for carrying the sensing signal may need to be directed towards the sensing target.

In existing networks, it is typical for the precoding matrix to be selected from a book of predetermined precoding matrices, known as a codebook. This selection may involve the transmission of a reference signal from the base station 110. The reference signal may be a Channel State Information Reference Signal (CSI-RS). The selection may involve the transmission of a reference signal from a target UE, for example UE 121. The reference signal may be a Sounding Reference Signal (SRS). Such known methods for selecting the precoding matrix from a codebook are aimed at optimizing the main lobes for communication. That is, they are aimed at optimizing the main lobe to carry the signal to be transmitted and to be directed at the target UE, for example UE 121.

However, in an ISAC network 100 according to embodiments of the present disclosure, it may be preferable to select the main lobe 160 for sensing and at least one of the side lobes 161, 162, 163, 164 for communication. That is, it may be preferable to select the main lobe 160 for carrying a sensing signal and to select at least one of the side lobes 161, 162, 163, 164 for carrying at least one communications signal. For example, as depicted in Figure 2, the main lobe 160 is selected for sensing sensing target 131 and the side lobe 162 is selected for communications with communications target 121.

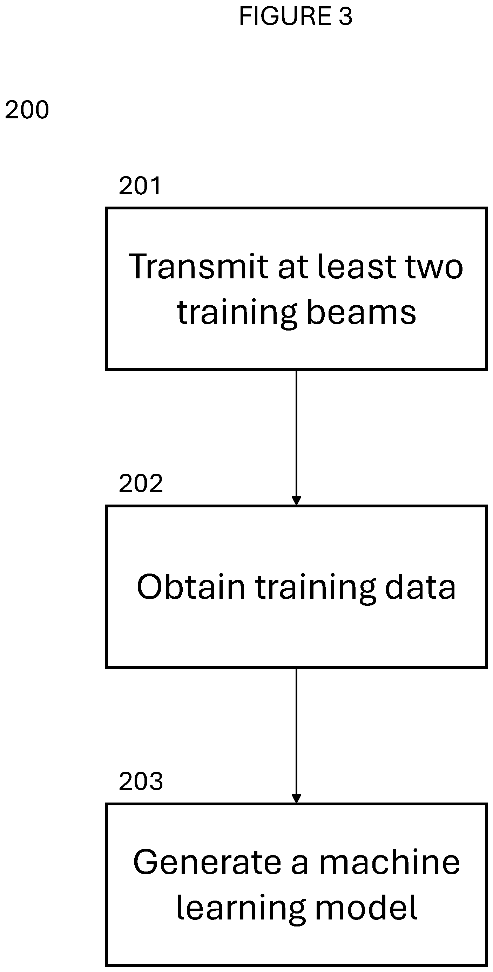

Figure 3 shows a method 200 for generating a model. The model is for determining precoding and/or decoding information which may be used to configure beamforming. That is, the precoding and/or decoding information from the model may be used to prepare a precoding matrix for beamforming and/or a decoding matrix for mitigating interference.

At step 201, at least two training beams are transmitted. That is, at least two beams are transmitted for the purposes of training the model.

At step 202, training data is obtained. The training data may comprise data related to the performance of the air interface established by each of the training beams. The training data may comprise data indicative of any, more than one or all of received signal power, signal quality, signal error, a location of a cell of the cellular network, or channel quality. More specifically, the training data may comprise any, more than one or all of a Reference Signal Received Power, Reference Signal Time difference, Line of Sight indicators, Non Line of Sight indicators, Signal to Noise ratio, Signal to Interference ratio, Signal to Interference plus Noise ratio, Block Error Rate, Error Vector Magnitude, Sounding Reference Signal, Channel Status Indicators, Channel State Indicator Reference Signal, Rank Indicators, or Channel Quality Indicators. The training data may comprise any other relevant indictor, measurement, or the like known in the art.

At step 203, a machine learning model is generated. The model for determining precoding and/or decoding information may comprise the machine learning model. The machine learning model may be generated using the training data. The generation may comprise training. The generation may comprise supervised learning. The generation may comprise unsupervised learning. The generation may comprise backpropagation. The generation may comprise any other method known in the art for generating machine learning models.

Examples of the use of artificial intelligence in beamforming can be found in Liu, C., et al. (2022) 'Learning-based predictive Beamforming for Integrated Sending and Communication in Vehicular Networks' (arXiv:2108.1154). One or more of the features disclosed therein may be adapted by the person skilled in the art for use in embodiments of the present disclosure.

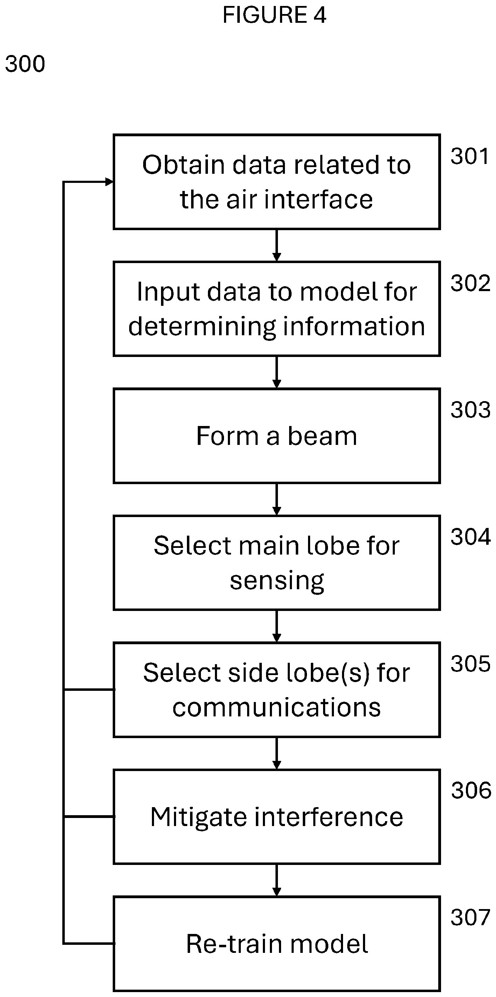

Figure 4 shows a method 300 for configuring the beamforming of a base station, for example base station 110, in an ISAC network, for example ISAC network 100.

At step 301 data indicative of the performance of the air interface is obtained. The data may be indicative of communications performance. The data may be indicative of sensing performance. The data may comprise data indicative of any, more than one or all of received signal power, signal quality, signal error, a location of a cell of the cellular network, or channel quality. More specifically, the data may comprise any, more than one or all of a Reference Signal Received Power, Reference Signal Time difference, Line of Sight indicators, Non Line of Sight indicators, Signal to Noise ratio, Signal to Interference ratio, Signal to Interference plus Noise ratio, Block Error Rate, Error Vector Magnitude, Sounding Reference Signal, Channel Status Indicators, Channel State Indicator Reference Signal, Rank Indicators, or Channel Quality Indicators. The data may comprise any other relevant indictor, measurement, or the like known in the art.

At step 302 the data is inputted into a model. The model may be the model generated in method 200. The model comprises a machine learning model. The model is for determining precoding information. The precoding information may be information that allows for the generation or selection of a precoding matrix. The model may be for determining decoding information. The decoding information may be information that allows for the generation or selection of a decoding matrix.

At step 303 the precoding information 223 is used to configure beamforming, for example the beamforming of the beamformed beam of Figure 2. Using the precoding information for configuring beamforming may comprise transmitting the precoding information from a target UE, for example UE 121, to the base station 110. Using the precoding information for configuring the beamforming may comprise determining a precoding matrix from the precoding information. Using the precoding information for configuring the beamforming may comprise forming a beamformed beam using the precoding matrix. At step 304, the main lobe of the beamformed beam is selected for sensing. At step 305, one or more of the side lobes of the beamformed beam is selected for communications.

An example scenario in which a main lobe was selected for sensing and a side lobe was selected for communications may be found in Kumari, P., et al. (2017) 'IEEE 802.11ad-based Rader: An Approach to Joint Vehicular Communication-Radar System' (arXiv:1702.05833). One or more of the features disclosed therein may be adapted by the person skilled in the art for use in embodiments of the present disclosure.

At optional step 306, the decoding information is used to mitigate interference. Using the decoding information for mitigating interference may comprise transmitting to the decoding information from a target UE, for example UE 121, to the base station 110. Using the decoding information for mitigating interference may comprise transmitting to the decoding information from the base station 110 to a target UE, for example UE 121. Using the decoding information for mitigating interference may comprise determining a decoding matrix from the decoding information.

At optional step 307, the machine learning model is re-trained. The re-training may comprise training an updated machine learning model using the data indicative of the performance of the air interface obtained in step 301. The re-training may comprise training an updated machine learning model using the training data indicative of the performance of the air interface used to generate the model in method 200. The re-training may comprise using a combination of the obtained data and the training data. The re-training may comprise using the updated machine learning model for determining future precoding information. The re-training may comprise using the updated machine learning model for determining future decoding information.

The method 300 may return to step 301 after step 305. Alternatively, the method 300 may return to step 301 after optional step 306. Alternatively, the method 300 may return to step 301 after optional step 307.

It is contemplated that if the machine learning model is generated by method 200 then the re-training of optional step 307 may comprise training an updated machine learning model using both the data obtained in step 301 and the training data. It is further contemplated that this optional step 307 may comprise training an updated machine learning model using all previously obtained data, not simply the data from the latest performance of the method 300, with or without the training data of method 200. In this way, the data available for training the model is continuously updated and expanded in order to improve the accuracy of the machine learning model.

Alternatively, a subset of all previously obtained data, for example the data from the most recent few performances of the method 300, may be used with or without the training data of method 200. In this way, the machine learning model is continuously re-trained using the most relevant training data specific to, for example, the current geographical or urban environment which may be changing over time.

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the disclosure are applicable to all aspects of the disclosure and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific networks in some examples, (such as a 4G/LTE or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present disclosure is applied to 3GPP NR. However, the technical features of the present disclosure are not limited thereto. For example, although the following detailed description is given based on a mobile communication system corresponding to a 3GPP NR system, aspects of the present disclosure that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the disclosure. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

The terminology used herein is for the purpose of describing particular embodiments only and is not intended to be limiting of the disclosure. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the disclosure, and does not indicate a limitation on the scope of the disclosure unless otherwise claimed. No language in the specification should be construed as indicating any nonclaimed element as essential to the practice of the disclosure.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.

In the drawings and specification, there have been disclosed typical embodiments of the disclosure and, although specific terms are employed, they are used in a generic and descriptive sense only and not for purposes of limitation, the scope of the disclosure being set forth in the following claims.

## Claims

1. A method for configuring beamforming for an air interface of an integrated sensing and communication cellular network; the method comprising:
obtaining data indicative of the performance of the air interface;
inputting the obtained data into a model for determining precoding information, the model comprising a machine learning model;
using the precoding information determined by the model for configuring the beamforming;
wherein configuring the beamforming comprises:
forming a beam comprising one or more main lobes and one or more side lobes; and
selecting at least one of the main lobes for sensing and at least one of the side lobes for communication.

2. The method of claim 1, wherein the data indicative of the performance of the air interface is indicative of communication performance and/or sensing performance.

3. The method of any of claims 1 or 2, wherein:
the model is further for determining decoding information; and
the method comprises subsequent to the step of using the precoding information, a step of using the decoding information determined by the model for mitigation of interference.

4. The method of any of claims 1 to 3, wherein the data indicative of the performance of the air interface comprises data indicative of received signal power, signal quality, and/or signal error.

5. The method of any of claims 1 to 4, wherein the data indicative of the performance of the air interface comprises data indicative of a location of a cell of the cellular network and/or indicative of channel quality.

6. The method of any of claims 1 to 5 wherein the air interface is an air interface between a user equipment and a base station of a cellular network.

7. The method of any of claims 1 to 6, wherein the precoding information is information that allows for the generation of a precoding matrix.

8. The method of claims 1 to 7, wherein the method comprises subsequent to the step of using the precoding information, and optionally the decoding information, a step of re-training the machine learning model, wherein re-training the machine learning model comprises:
training an updated machine learning model based on the obtained data; and
utilizing the updated machine learning model for determining future precoding information and optionally decoding information.

9. A method for generating a machine learning model for use in the method of any of claims 1 to 8, the method comprising:
transmitting at least two training beams over an air interface;
obtaining training data from measurement of the at least two training beams indicative of the performance of the air interface;
training a machine learning model based on the obtained training data.

10. The method of claim 8, wherein the machine learning model is generated using the method of claim 9, and wherein:
the step of training an updated machine learning model is carried out based on the obtained data in combination with the obtained training data.

11. The method of any of claims 8 to 10, wherein training comprises supervised learning and/or unsupervised learning.

12. The method of any of claims 1 to 11, wherein the step of using the precoding information comprises transmitting the precoding information from a user equipment to a base station.

13. The method of any of claims 1 to 12, wherein the step of using the precoding information comprises determining a precoding matrix from the determined precoding information; and optionally
wherein configuring the beamforming comprises forming a beam using the determined precoding matrix.

14. A computer program product comprising instructions which, when the program is executed by a computer, cause the computer to carry out the method of any of claims 1 to 13.

15. An entity of a cellular network for carrying out the method of any of claims 1 to 13.
